# EUROPEAN PATENT APPLICATION

(11) **EP 3 057 041 A1**
(43) Date of publication of application: **17.08.2016**
(21) Application number: 15290031.2
(22) Date of filing: 11.02.2015
(51) Int. Cl.: G06Q 10/02, G06Q 10/06, G06Q 10/08, G06Q 50/14

(54) **Travel activity tracking system**

(71) Applicant: Amadeus S.A.S., 06902 Sophia Antipolis Cedex (FR)
(72) Inventor: Geraci, Frederic, 06370 Mouans Sartoux (FR); Ramos, Emanuel Muller, 06600 Antibes (FR); Mikaelian, Jerome, 06410 Biot (FR)
(74) Representative: Samson & Partner Patentanwälte mbB

(57) **Abstract**

Systems, methods, and computer program products for processing real-time travel data. A record database is queried to determine a particular record from a plurality of records managed by the record database. The particular record is parsed to identify travel steps of the particular record. For each travel step, one or more corresponding checkpoints are determined. A model is generated for the particular record, where the model comprises a travel step object for each identified travel step, and each travel step object comprises a checkpoint object for each of the one or more corresponding checkpoints of the travel step. A departure control system is monitored for real-time departure control data corresponding to the particular record, and a status of at least one checkpoint object of the model is updated based at least in part on the real-time departure control data corresponding to the particular record.

## Description

### TECHNICAL FIELD

The invention is generally related to computers and data processing, and in particular to systems, methods, and computer program products for processing real-time travel data.

### BACKGROUND

Computer technology is increasingly used in the travel industry to manage and support travel reservations, as well as data associated therewith. In particular, third party reservation agents, such as travel agents, and/or customers (e.g., travelers) often utilize computer based devices to interface with a travel reservation system, such as a Global Distribution System (GDS), to book travel arrangements and/or travel related services for the customer. In general, the global distribution system facilitates the booking/reservation of one or more travel inventory items for a traveler, where a travel inventory item refers to a saleable unit associated with a travel service (e.g., a ticket for a flight, a ticket for rail travel, a night for a hotel accommodation, etc.). After reservation, departure control systems, reservation systems, and/or other such computing systems are generally used to process travel reservation related activity (e.g., check-in, boarding, etc.).

Consequently, a need exists in the art for improved systems, methods, and computer program products for travel reservation management and the processing of real-time travel data.

### SUMMARY

Embodiments of the invention generally comprise methods, systems, and computer program products for processing real-time travel data. A travel record database is queried to determine a particular travel record from a plurality of travel records managed by the travel record database. The particular travel record is parsed to identify one or more travel steps of the particular travel record, and for each of the one or more travel steps, one or more corresponding checkpoints are determined. A travel model for the particular travel record is generated in a data structure of a travel model database, where the travel model comprises a travel step object for each identified travel step, and each travel step object comprises a checkpoint object for each of the one or more corresponding checkpoints of the travel step. A departure control system is monitored for real-time departure control data corresponding to the particular travel record, and a status of at least one checkpoint object of the travel model is updated based at least in part on the real-time departure control data corresponding to the particular travel record.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.
FIG. 1 is a block diagram of one or more reservation systems, one or more inventory systems, one or more client devices, and a data processing system consistent with embodiments of the invention.
FIG. 2 is a block diagram of a data processing system of FIG. 1.
FIG. 3 is a flowchart illustrating a sequence of operations that may be performed by the data processing system of FIG. 1 to process real-time travel data.
FIG. 4 is a flowchart illustrating a sequence of operations that may be performed by the data processing system of FIG. 1 to generate and/or update a graphical user interface.
FIG. 5 is a block diagram of an example architecture of a travel model that may be generated by the data processing system of FIG. 1.
FIG. 6 is a block diagram of an example travel model that may be generated by the data processing system of FIG. 1.
FIG. 7 is a sequence diagram illustrating a routine that may be performed by the data processing system, a client device, and/or the travel record system of FIG. 1 to generate a graphical user interface based on processed travel data consistent with embodiments of the invention.
FIG. 8 is an example graphical user interface that may be generated by the data processing system of FIG. 1.
FIG. 9 is an example graphical user interface that may be generated by the data processing system of FIG. 1.
FIG. 10 is an example graphical user interface that may be generated by the data processing system of FIG. 1.
FIG. 11A is a sequence diagram illustrating a routine that may be performed by the data processing system, a client device, and/or the departure control system of FIG. 1 to generate and/or update a graphical user interface based on processed travel data consistent with embodiments of the invention using a push mechanism.
FIG. 11B is a sequence diagram illustrating a routine that may be performed by the data processing system, a client device, and/or the departure control system of FIG. 1 to generate and/or update a graphical user interface based on processed travel data consistent with embodiments of the invention, using a pull mechanism.
FIG. 12 is an example graphical user interface that may be generated by the data processing system of FIG. 1.
FIG. 13 is an example graphical user interface that may be generated by the data processing system of FIG. 1.

### DETAILED DESCRIPTION

Systems, methods, and computer program products for processing real-time travel data. A record database is queried to determine a particular record from a plurality of records managed by the record database. The particular record is parsed to identify travel steps of the particular record. For each travel step, one or more corresponding checkpoints are determined. A model is generated for the particular record, where the model comprises a travel step object for each identified travel step, and each travel step object comprises a checkpoint object for each of the one or more corresponding checkpoints of the travel step. A departure control system is monitored for real-time departure control data corresponding to the particular record, and a status of at least one checkpoint object of the model is updated based at least in part on the real-time departure control data corresponding to the particular record. In some embodiments of the invention, the record database comprises a travel record database, the particular record is a travel record, and the model is a travel model for the travel record.

Embodiments of the invention process travel data associated with a travel record to track a status of a traveler. In some embodiments of the invention, based on real-time travel data received at a data processing system, embodiments of the invention may update a travel model associated with the travel record. The data processing system may generate one or more graphical user interface displays based on the travel model. A user may view the one or more graphical user interface displays with a user device in communication with the data processing system such that the user may review travel related information for the travel reservation. For example, a traveler may review a status for a flight-date included in the travel record. As another example a relative may review a status of one or more travel services of a traveler's travel record. In general, a third party that is interested in a travel record may be referred to as a follower. As will be appreciated, a user may refer to a traveler or a follower.

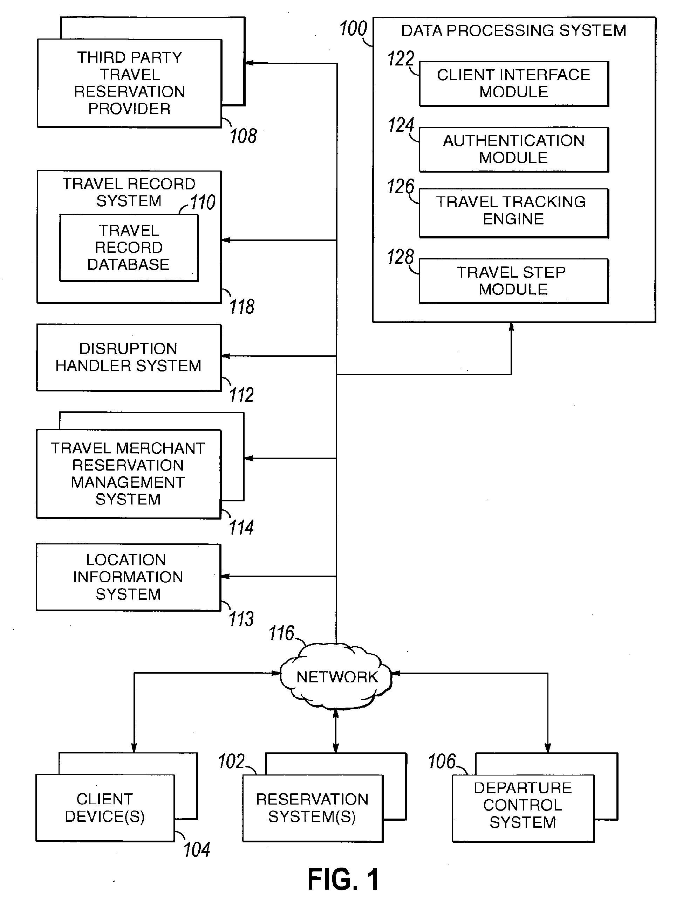

Turning now to the figures, and particularly to FIG. 1, this figure provides a block diagram illustrating the one or more devices and/or systems consistent with embodiments of the invention. As shown in FIG. 1, a data processing system 100 may be in communication with one or more systems generally associated with travel reservation and travel reservation management. In particular, a reservation system 102 that may be implemented as one or more servers, one or more client devices 104, one or more departure control systems 106, one or more third party travel reservation providers 108 (e.g., travel reservation websites), a travel record system 110, a disruption handler system 112, a location information system 113, and/or one or more travel merchant reservation management systems 114 may be in communication over a communication network 116, where the communication network 116 may comprise the Internet, a local area network (LAN), a wide area network (WAN), a cellular voice/data network, one or more high speed bus connections, and/or other such types of communication networks. As will be appreciated, the reservation system 102 may correspond to a global distribution system (GDS).

The travel record system 110 may comprise a travel record database 118. The travel record database 118 stores one or more travel records, where each travel record includes traveler information and reservation information for one or more reserved travel inventory items. In some embodiments of the invention, the travel record comprises a passenger name record (PNR), where a PNR generally refers to a record that includes itinerary and passenger information for one or more travelers. As will be appreciated, when one or more travel inventory items are booked, the reservation system 102 may generate a travel record that includes a passenger name record in the travel record database 118.

Generally, the third party travel reservation provider 108 may correspond to a web-based travel reservation service provider. The disruption handler system 112 generally corresponds to a system configured to handle travel service disruptions, including flight cancellations, flight delays, and/or other such travel service disruptions. The location information system 113 generally corresponds to a system configured to determine a location of a person/traveler based on data received from a user device of the person/traveler (e.g., GPS, iBeacon, and/or other such location determining technology. Furthermore, the location information system 113 may communicate location information and/or real-time location information corresponding to the traveler to the data processing system 100 via a data feed and/or upon request by the data processing system 100.A travel merchant reservation management system 114 corresponds to a computing system maintained by a travel merchant that is configured to process travel reservation actions. For example, a travel merchant reservation management system 114 may be configured to manage hotel reservations, and the travel merchant reservation management system 114 may process check-ins, check-outs, no-show reservations, etc.

Consistent with embodiments of the invention, the data processing system 100 includes one or more modules/engines that may be configured to perform operations consistent with some embodiments of the invention. In particular, the data processing system 100 includes a client interface module 122, where the client interface module 122 is configured to generate one or more graphical user interfaces accessible by a client device 104 via the communication network 116 such that the data processing system 100 may send data to the client device 104 and receive data from the client device 104 In some embodiments, the client interface module 122 may generate a web-based interface that may be accessible by a client device 104 via the communication network 116 such that a user may navigate to the web-based interface with an Internet browser executing on the client device 104, and the web-based interface may cause at least one graphical user interface to be output at the client device 104 such that the user may interface with the data processing system 100 via the at least one graphical user interface.

The authentication module 124 may be configured to authenticate a user of a client device 104 that is requesting information from the data processing system 100 (through the client interface module 122). The authentication module 124 may determine whether a user of a connecting client device 104 is authorized to view information for a particular travel record. The travel tracking engine 126 is generally configured to analyze a particular travel record of the travel record database 118 and generate a travel model for the particular travel record based thereon. In addition, the travel tracking engine 126 is configured to analyze received travel data from various sources of travel data for a particular travel reservation (e.g., the departure control system 106, the reservation system 102, the disruption handler system 112, the location information system 113, and/or a travel merchant reservation management system 114). Based on the received travel data, the travel tracking engine 126 is configured to update the travel model of the particular travel record. The travel step module 128 is configured to analyze the particular travel record and identify one or more travel steps of the particular travel record, where the travel tracking engine 126 generates the travel model based at least in part on the identified travel steps.

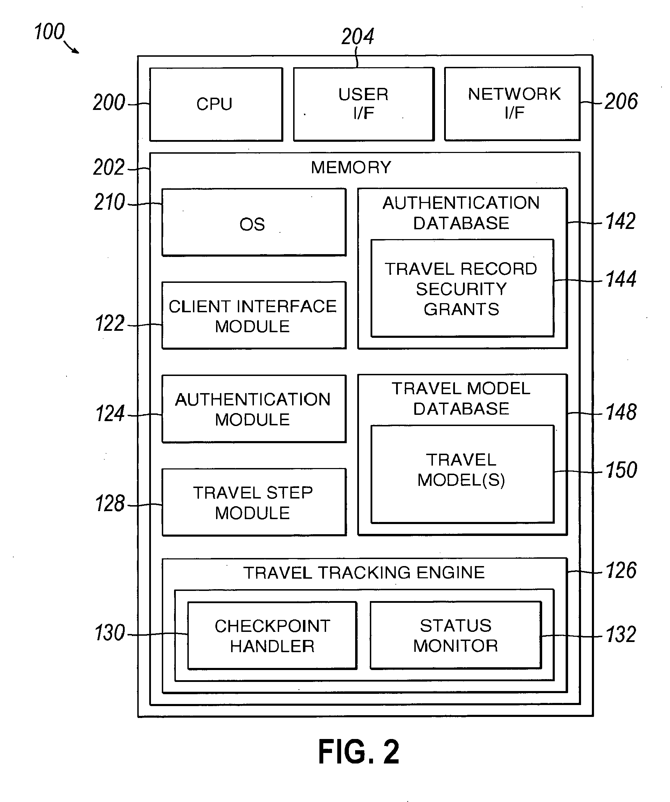

FIG. 2 provides a block diagram that illustrates the components of the data processing system 100. The data processing system 100 includes at least one processor (CPU)200 including at least one hardware-based microprocessor and a memory 202 coupled to the at least one processor 200. The memory 202 may represent the random access memory (RAM) devices comprising the main storage of data processing system 100, as well as any supplemental levels of memory, e.g., cache memories, non-volatile or backup memories (e.g., programmable or flash memories), read-only memories, etc. In addition, memory 202 may be considered to include memory storage physically located elsewhere in the data processing system 100, e.g., any cache memory in a microprocessor, as well as any storage capacity used as a virtual memory, e.g., as stored on a mass storage device or on another computer coupled to the data processing system 100.

For interface with a user or operator, the data processing system 100 may include a user interface 204 incorporating one or more user input/output devices, e.g., a keyboard, a pointing device, a display, a printer, etc. Otherwise, data may be communicated to and from another computer or terminal (e.g., a client device 104, a departure control system 106, the travel record system 110, the disruption handler system 112, the location information system 113, the travel merchant reservation management system 114, etc.) over a network interface 206 coupled to the communication network 116. The data processing system 100 also may be in communication with one or more mass storage devices, which may be, for example, internal hard disk storage devices, external hard disk storage devices, external databases, storage area network devices, etc.

The data processing system 100 typically operates under the control of an operating system 210 and executes or otherwise relies upon various computer software applications, components, programs, objects, modules, engines, data structures, etc., including for example, the client interface module 122,the authentication module 124, the travel tracking engine 126, and/or the travel step module 128. The travel tracking engine 126 may include a checkpoint handler 130 and a status monitor 132. In general, the checkpoint handler 130 may extract data related to travel steps from a travel record for storage in a travel model, and the status monitor 132 may analyze received travel related data for analysis and update of one or more statuses for checkpoints.

In addition, the memory 202 may store an authentication database 142 that includes travel record security grants 144. In general, the travel record security grants 144 may include information that identifies users (e.g., a traveler or a follower) that may access information about a travel record stored at the data processing system 100. In general, a respective travel record security grant 144 may identify an associated travel record, and the travel record security grant 144 includes identification and/or verification information (e.g., a username and password, an email address and pin number, etc.) for users that may access information associated with the identified travel record. In addition, a respective travel record security grant 144 may specify a level of access for a particular user (e.g., write/modify access, read access, etc.). As shown in FIG. 2, the memory 202 includes a travel model database 148, where the travel model database 148 may store one or more travel models 150. In general, each travel model 150 corresponds to a respective travel record.

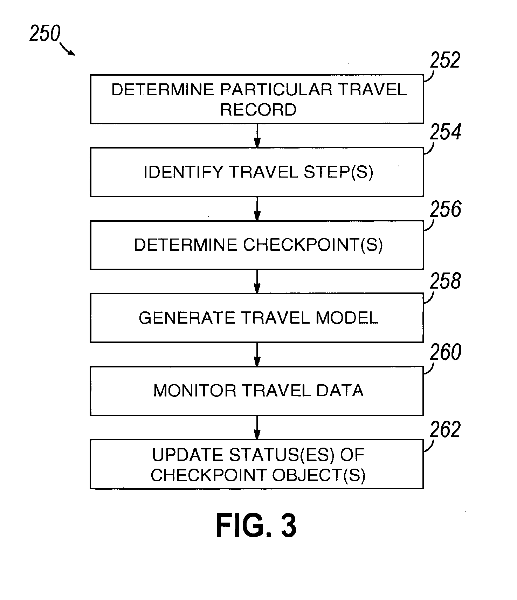

Turning now to FIG. 3, this figure provides a flowchart 250 that illustrates a sequence of operations that may be performed by a data processing system 100 consistent with embodiments of the invention to process real-time travel data. The data processing system may determine a particular travel record (block 252) from among a plurality of travel records maintained at a travel record database by querying the database. As will be appreciated, embodiments of the invention interface with a user via a client device 104 in communication with the data processing system 100 over the communication network 116. Consistent with embodiments of the invention, a user may provide information to the data processing system via a web-based interface that identifies the particular travel record. For example, the user may input a travel reservation number or other identifying information, and the data processing system 100 may query the travel record database based at least in part thereon.

Upon determining and retrieving the particular travel record from the travel record database, the data processing system 100 analyzes the travel record to identify one or more travel steps associated with the particular travel record (block 254). As discussed, a travel record generally comprises information for a travel itinerary and/or booked travel inventory items for one or more travelers. For example, a travel record may indicate one or more flights, a hotel room reservation, and/or a rental car reservation. Generally, each booked travel inventory item corresponds to a travel service. For example, if the travel service is a flight, a booking for a flight-date associated with the flight corresponds to a booked travel inventory item. Each booked travel inventory item and the associated travel service generally corresponds to a travel step. Travel steps may correspond to, for example, flights, hotel reservations, rail travel, transportation rental, ferry travel, and/or other such types of travel services for which travel inventory items may be booked. As an example, if a travel record includes booking for a flight-date and a reserved room for a hotel, the data processing system may identify a first travel step corresponding to the booked seat for the flight-date and a second travel step corresponding to the reserved room for the hotel.

For each travel step, the data processing system 100 determines one or more checkpoints (block 256). In general, a checkpoint is determined for each travel event that may be monitored for a travel step. For example, for a flight, a checkpoint corresponding to flight check-in, flight boarding, flight takeoff, flight landing, baggage handling, arrival, ticket changes, etc. may be determined. As will be appreciated, for a flight, each travel event may be monitored based on real-time departure control data received from a departure control system. For a travel step corresponding to a hotel, a checkpoint may be determined for a reservation check-in, a reservation change, and/or a reservation check-out. For a travel step corresponding to a rental car, a checkpoint may be determined for a reservation pick-up, a reservation change, and/or a reservation drop-off.

Based on the identified travel steps and the one or more checkpoints for each travel step, the data processing system 100 generates a travel model for the particular travel record (block 258). In general, a travel model may comprise a main node that identifies a corresponding travel record. The travel model comprises one or more travel step objects relationally associated with the main node that each corresponds to a travel step identified for the corresponding travel record. In addition, the travel model comprises, for each travel step object, one or more checkpoint objects, where each checkpoint object is associated with a respective determined checkpoint for the corresponding travel step of the travel step object. Each checkpoint object stores status information (referred to as a status) that may indicate whether a travel event associated with the corresponding checkpoint has occurred. Consistent with embodiments of the invention, the travel model may be stored in a data structure of the memory 202 of the data processing system 100 in the travel model database 148.

In general, the data processing system 100 monitors one or more data feeds from various sources for travel data corresponding to the particular travel record (block 260). Generally, monitoring may be performed asynchronously with data feeds communicated to the data processing system by the various systems of travel data (e.g., a push mechanism), and/or by synchronous querying of the various systems of travel data by the data processing system 100 (e.g., a pull mechanism). As will be appreciated, the data processing system 100 may be configured to monitor and process travel data for more than one travel record, where the data processing system 100 may generate a model for each travel record, and the data processing system may monitor travel data from one or more data feeds for each travel record. For example, the data processing system 100 may monitor a departure system control feed of a departure control system 106 for real-time departure control data. As will be appreciated, the departure control system feed and the departure control data are configured for departure control, and therefore the departure control data may be processed and/or filtered by the data processing system 100 to detect travel data relevant to a travel record. Consistent with embodiments of the invention, the data processing system 100 updates a status of one or more checkpoint objects of the travel model for the particular travel record based at least in part on the travel data determined to correspond to the particular travel record (block 262). For example, if a first travel step object of the particular record corresponds to a flight, and a first checkpoint object of the first travel step object corresponds to check-in, the data processing system 100 may monitor a departure control system feed of a departure control system for real-time departure control data corresponding to the particular travel record that indicates that the traveler has checked-in for the flight. Responsive to detecting the real-time departure control data that indicates that the traveler has checked-in for the flight, the data processing system may update a status of the first checkpoint object to indicate that check-in has occurred.

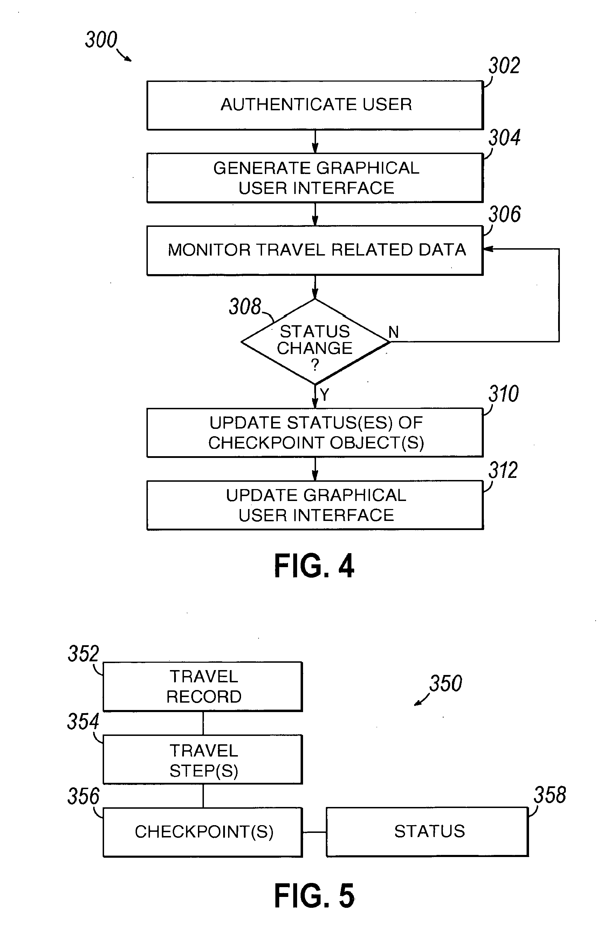

Turning now to FIG. 4, this figure provides a flowchart 300 that illustrates a sequence of operations that may be performed by the data processing system 100 to generate and update a graphical user interface for review by a user. As discussed, a user may request to view travel information for a particular travel record via a client device 104 interfacing with the data processing system 100. The data processing system 100 may authenticate the user (block 302), where authentication may determine whether the user is authorized to view the travel information and/or a level of access to the travel information to which the user may be allowed. In general, the data processing system 100 may authenticate a user based at least in part on a travel record security grant 144 associated with the particular travel record.

After authentication, the data processing system 100 generates a graphical user interface (block 304) that may be communicated to the client device 104. The graphical user interface may be based at least in part on the travel model corresponding to the particular travel record. Furthermore, the graphical user interface may comprise one or more data elements that are based at least in part on the one or more travel step objects, the one or more checkpoint objects, and a status stored in each of the one or more checkpoint objects of the travel model. In some embodiments of the invention, the data processing system 100 continues monitoring travel related data for the particular travel record (block 306) to detect travel data corresponding to a status change of at least one checkpoint object of the travel model corresponding to the particular travel record. In response to detecting travel data corresponding to a status change of at least one checkpoint object ("Y" branch of block 308), the data processing system 100 updates any checkpoint objects of the travel model for which a status change was detected for the corresponding checkpoint (block 310), and the data processing system 100 updates the graphical user interface (block 312). In particular, the data processing system 100 may update one or more data elements based at least in part on the update to the one or more checkpoint objects.

Turning now to FIG. 5, this figure provides a block diagram that illustrates an architecture of an example travel model 350 that may be stored in a data structure consistent with embodiments of the invention. As shown, the travel model 350 may comprise a main node 352 that stores information determined from the travel record corresponding to the travel model 350. In particular, the main node 352 may store passenger information, a reservation identifier, and/or other such information that may identify the travel record to which the travel model 350 corresponds. The travel model 350 comprises one or more travel step objects 354 relationally associated with the main node 352. As discussed, for the corresponding travel record, the data processing system 100 identifies travel steps, and the data processing system generates a travel step object 354 for each identified travel step. For each travel step, the data processing system determines one or more checkpoints, and the travel model 350 comprises one or more checkpoint objects 356relationally associated to each travel step object 354. For a particular travel step object 354 corresponding to a particular travel step, each checkpoint object 356 corresponds to a respective checkpoint determined for the particular travel step. For each checkpoint object 356, the travel model stores a status 358. In general, the status 358 for a checkpoint object 356 indicates a status of the checkpoint. For example, if a travel step object is associated with a flight and a checkpoint object 356 is associated with check-in for the flight, the status 358 for the checkpoint object 356 may indicate whether the traveler has checked-in.

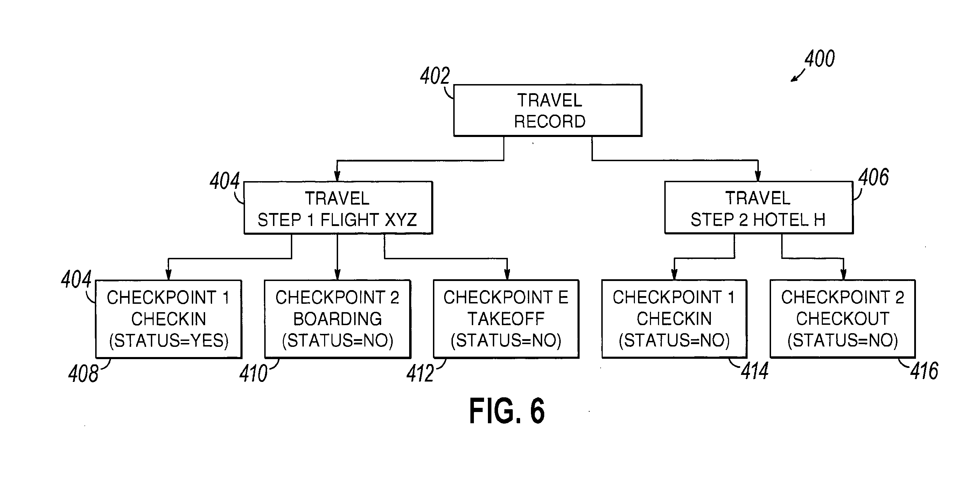

FIG. 6 provides a diagrammatic illustration of an example travel model 400 for a particular travel record. As shown, a main node 402 comprises information that identifies the particular travel record. In this example, the travel record comprises a first travel step that corresponds to a flight ('Flight XYZ') and a second travel step that corresponds to a hotel reservation ('Hotel H'). Therefore, the travel model 400 includes a first travel step object 404 corresponding to Flight XYZ (labeled 'Travel step 1'), and the travel model 400 includes a second travel step object 406 (labeled 'Travel step 2') corresponding to the Hotel H reservation. As shown, the travel step objects 404, 406 are relationally associated with the main node 402.

In this example, for Flight XYZ, three checkpoints are determined: 'Checkpoint 1' that corresponds to check-in; and 'Checkpoint 2' that corresponds to boarding; and 'Checkpoint 3' that corresponds to take-off. Therefore, for the first travel step object 404, the travel model 400 comprises a first checkpoint object 408 for Checkpoint 1, a second checkpoint object 410 for Checkpoint 2, and a third checkpoint object 412 for Checkpoint 3. In this example, the status for the first checkpoint object 408 indicates that check-in for Flight XYZ has occurred (illustrated as 'Checkin(status=yes)'; the status for the second checkpoint object 410 indicates that boarding for Flight XYZ has not occurred (i.e., `Boarding(status=no)'); and the status for the third checkpoint object 412 indicates that take-off for Flight XYZ has not occurred (i.e., 'TakeOff(status=no)').

For the Hotel H reservation, two checkpoints are determined: 'Checkpoint 1' that corresponds to check-in; and 'Checkpoint 2' that corresponds to check-out. Therefore, for the second travel step object 406, the travel model 400 includes a first checkpoint object 414 that corresponds to check-in and a second checkpoint object 416 that corresponds to check-out. The status for the first checkpoint object 414 of the second travel step object 406 indicates that check-in has not occurred for the hotel reservation (i.e., 'CheckIn(status=no)'); and the status for the second checkpoint object 416 of the second travel step object 406 indicates that check-out has not occurred for the hotel reservation (i.e., 'CheckOut(status=no)').

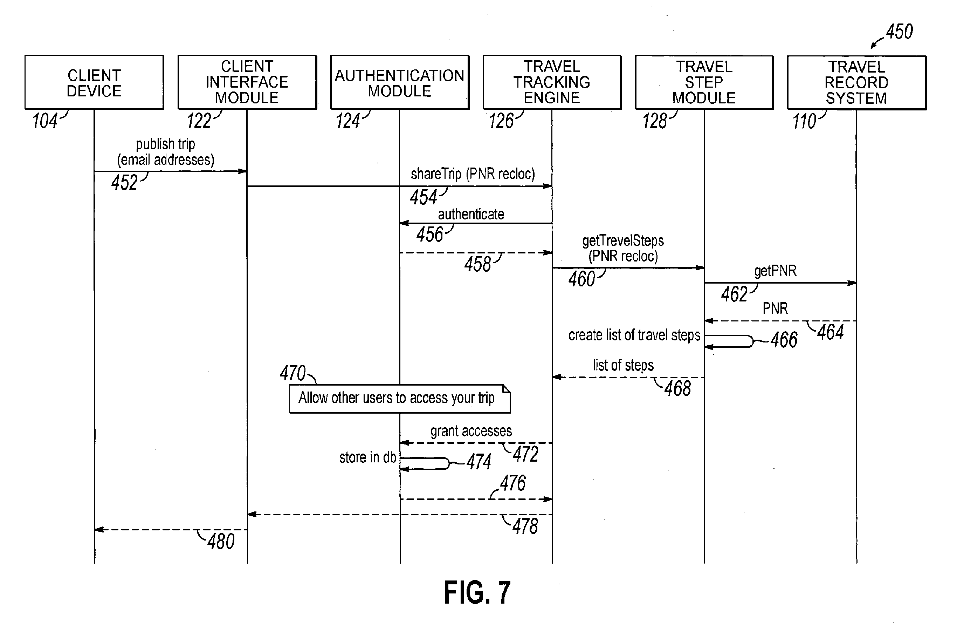

FIG. 7 provides an example routine 450in the form of a sequence diagram that may be performed by the data processing system 100 in communication with a client device 104 and the travel record system 110. As shown, a user may interface with the data processing system 100 via the client device 104 and the client interface module 122. As shown, the client device 104 may communicate a request to publish trip information (block 452), where the request to publish information may include an email address or other identifying information for the user, identifying information (e.g., an email address) for one or more other users, and/or identifying information for a particular travel record (e.g., a reservation number, traveler name, travel dates, etc.). The client interface module 122 generates a share trip request based on the information received from the client device 104, and the share trip request is communicated to the travel tracking engine 126 (block 454). The travel tracking engine 126 generates an authentication request based on the share trip request, and the travel tracking engine communicates the authentication request to the authentication module 124 (block 456). In general, the authentication request includes information that identifies the travel record and the user of the client device 104. The authentication module 124 authenticates publication of travel information for the travel record with the authentication database 142 based at least in part on the user identification information and/or the travel record. In this example, the request to publish trip information is authenticated (block 458).

Upon authentication, the travel tracking engine 126 communicates a travel record request to the travel step module 128 that includes information that identifies the travel record (block 460). The travel step module queries the travel record system 110 with the identifying information to thereby determine the travel record (in this example 'getPNR') (block 462). The travel record system 110 returns the travel record (in this example, 'PNR') (block 464), and the travel step module 128 analyzes the travel record to identify one or more travel steps of the travel record (block 466). The travel step module 128 returns a list of all travel steps identified for the travel record to the travel tracking engine 126 (block 468).

In this example routine, the user may have provided other identification information for other users authorized to view the published travel information. As shown, for one or more other users authorized to view the published travel information (block 470), the travel tracking engine 126 may grant access to the one or more other users (block 472) by updating one or more travel record security grants stored in the authentication database 142 via the authentication module 124 (block 474). Responsive to updating the authentication database 142, the authentication module 124 communicates a confirmation to the travel tracking engine 126 (block 476). The travel tracking engine 126 communicates a confirmation of the publication trip request to the client interface module 122 (block 478), and the client interface module 122 may generate at least one graphical user interface that is accessible by the client device 104 (block 480).

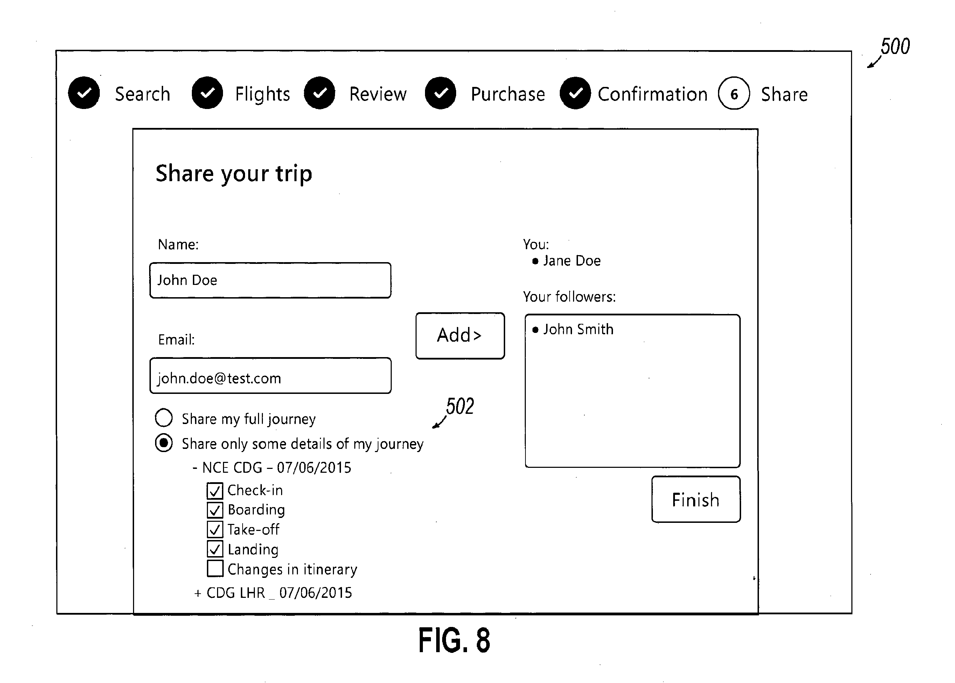

FIG. 8 provides a diagrammatic illustration of an example graphical user interface 500 that may be generated by the data processing system 100 with the client interface module 122 for output at a client device 104. In this example, a traveler (labeled 'John Doe') may interface with the data processing system 100 through the example graphical user interface 500 to authorize a second user (in this example 'Jane Doe') to view published travel information for a travel record of the traveler. As shown, the example graphical user interface 500 may allow the traveler to select one or more travel steps and/or one or more checkpoints from one or more data objects 502 of the graphical user interface to share with the second user. As will be appreciated, the data processing system 100 generates the example graphical user interface based on a travel model corresponding to the travel record of the traveler. In this example, a first travel step of the travel record corresponds to a flight 'NCE-CDG' on '07/06/2015', and a second travel step of the travel record corresponds to a flight 'CDG-LHR' on '07/06/2015'. For the first travel step, the traveler may select one or more checkpoints for which the second user may view status information, including 'Check-in', 'Boarding', 'Take-off, 'Landing', and 'Changes in itinerary'.

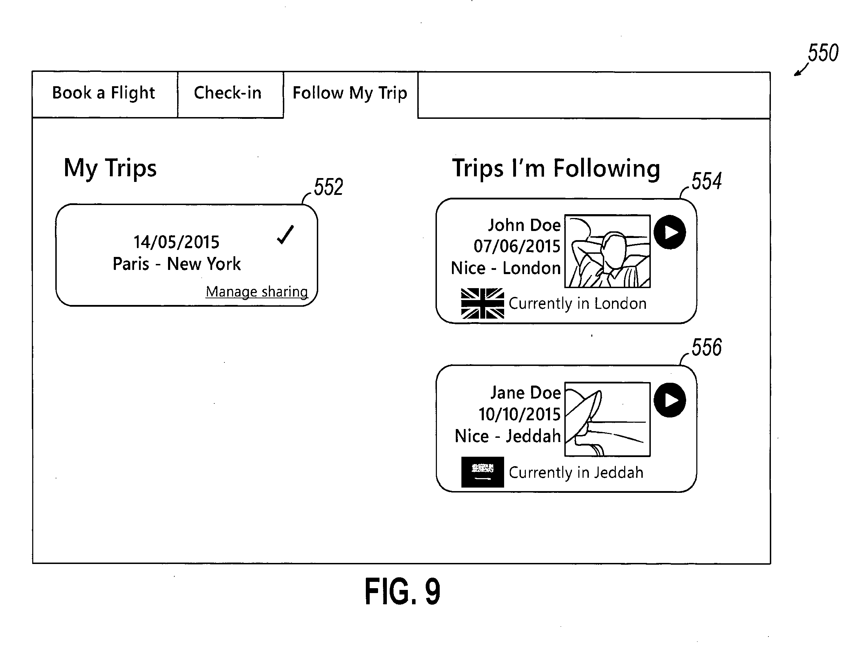

FIG. 9 provides a diagrammatic illustration of an example graphical user interface 550that may be generated by the data processing system 100 and accessible by a client device 104 via the client interface module 122. In this example, the graphical user interface 550 includes a data field associated with trips (e.g., travel records) scheduled for a user 552. In addition, in this example, the graphical user interface 550 includes a data field for each trip the user is following - i.e., a data field associated with a traveler 'John Doe' 554 and a data field associated with a traveler 'Jane Doe' 556. In this example graphical user interface 550, a user may select a data field 552-556 to interface with the data processing system 100, where selection of a data field 552-556 may cause the data processing system to generate a second graphical user interface for display on the client device 104. In general, responsive to the user selection of a particular data field 552-556, the data processing system 100 may analyze a particular travel model associated with the particular data field 552-556, and the data processing system 100 may generate a second graphical user interface based at least in part on the particular travel model.

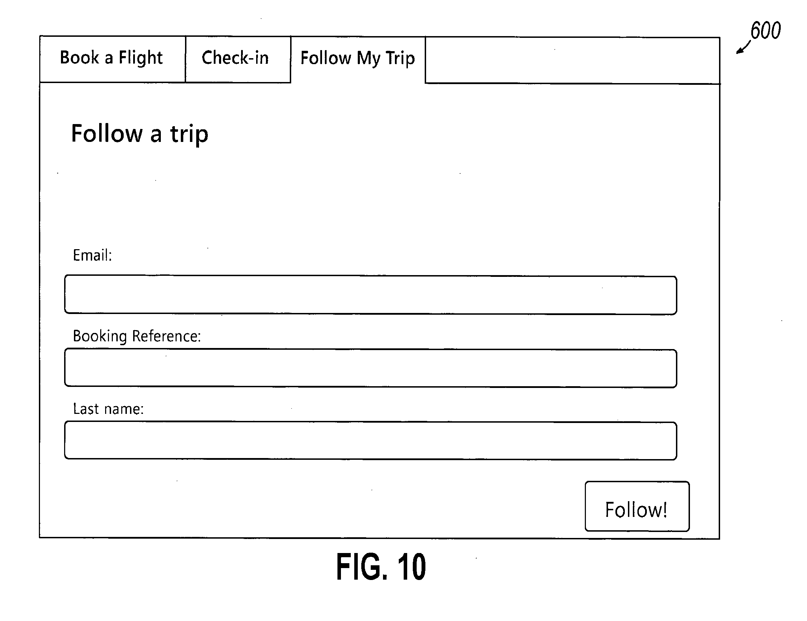

FIG. 10 provides a diagrammatic illustration of an example graphical user interface that may be generated by the data processing system 100 and accessible by a client device 104 via the client interface module 122. In this example, the example graphical user interface 600 may facilitate a follower accessing travel information of a traveler. As shown, a follower may provide an email address, a booking reference for the traveler's trip, and a last name associated with the traveler. After providing the information, the follower may submit the information to the data processing system 100 such that the follower may access/view travel information associated with the provided information.

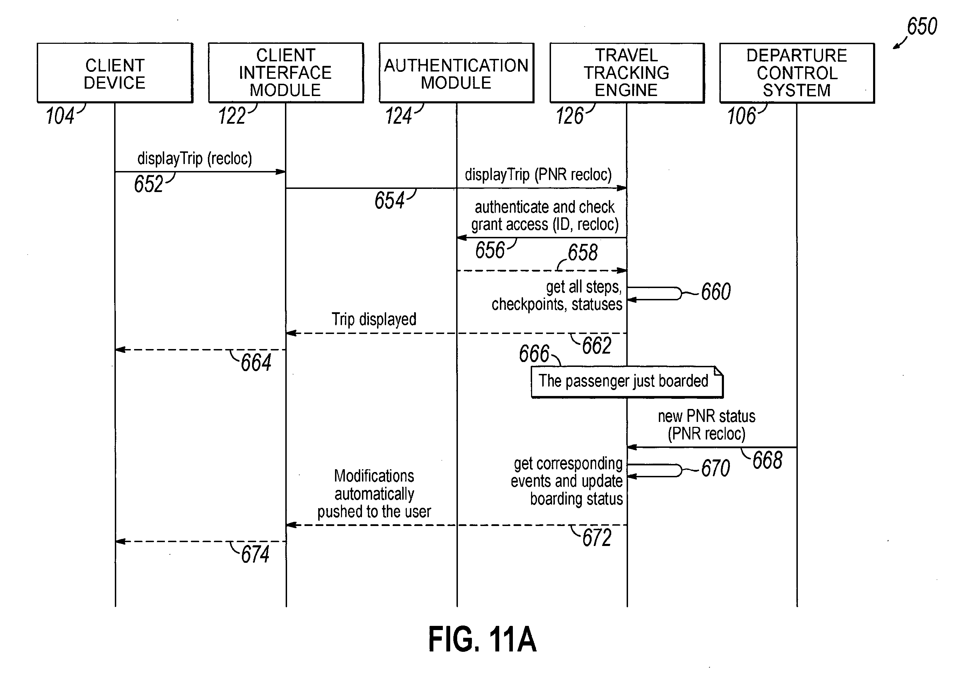

FIG. 11A provides an example routine 650 in the form of a sequence diagram that may be performed by the data processing system 100 in communication with a client device 104 and a departure control system 106. As shown, a client device 104 may communicate a trip information display request to the data processing system 100 via the client interface module 122 (block 652), where the trip information display request may include a record locator and/or other such identifying information that may identify a travel record and/or traveler. In addition, the request may include information that identifies a user of the client device 104. The client interface module 122 forwards the trip information display request to the travel tracking engine 126 (block 654), and the travel tracking engine 126 communicates an authentication request for the trip information display request to the authentication module 124 (block 656). The authentication module 124 checks the user and a travel record security grant associated with the travel record. In this example, the authentication module 124 indicates that the request is permitted and that the user is allowed to access trip information for the travel record (block 658).

In response to receiving a positive response from the authentication module 124, the travel tracking engine 126 accesses a travel model associated with the travel record identified in the trip information display request to retrieve travel steps, checkpoints, and statuses of the checkpoints for the travel record (block 660). Based on the travel steps determined from travel step objects of the travel model, checkpoints determined from checkpoint objects of the travel model, and statuses determined from the checkpoint objects, the data processing system 100 generates a graphical user interface that includes trip information corresponding to the travel record. The graphical user interface is accessible by the client device 104 through the client interface module 122 (blocks 662-664).

In this example, after generation of the graphical user interface, a travel event associated with a checkpoint of the travel record occurs - i.e., the traveler associated with the travel record boards a flight of the travel record (block 666). As discussed previously, the data processing system 100 may monitor a departure control system feed for real-time departure control data. Hence, when the traveler boards the flight, real-time data of the departure control system indicates that the traveler has boarded the flight. As will be appreciated, the data processing system 100 continuously monitors and analyzes the real-time departure control data from the departure control system 106 to determine data corresponding to travel records for which the data processing system 100 is maintaining travel information. Embodiments of the invention in which the departure control system 106 communicates travel data to the data processing system 100 (as shown in the example routine 650 of FIG. 11 A) may be referred to as configured with a push mechanism for monitoring travel data from various sources. Therefore, in this example, when the traveler boards the flight (block 666), the travel tracking engine 126 detects real-time departure control data from the departure control system 106 that indicates such boarding (block 668). Responsive to detecting boarding of the traveler for the travel record, the travel tracking engine 126 determines the event that has occurred (i.e., the traveler boarded), and the travel tracking engine 126 updates a status of a checkpoint object (in this example a boarding checkpoint object) associated with a travel step object corresponding to the flight in the travel model (block 670). In particular, the status of the checkpoint object for boarding is updated to indicate that the traveler has boarded. In response to updating the travel model associated with the travel record, the travel tracking engine 126 updates any published travel information associated with the travel record. In this example, the travel tracking engine 126 pushes the status update to the client interface, and the graphical user interface accessed by the client device 104 for the travel record is updated accordingly (blocks 672-674). In particular, a data field of the graphical user interface associated with the flight travel step and the boarding checkpoint may be updated to indicate that the traveler has boarded the flight.

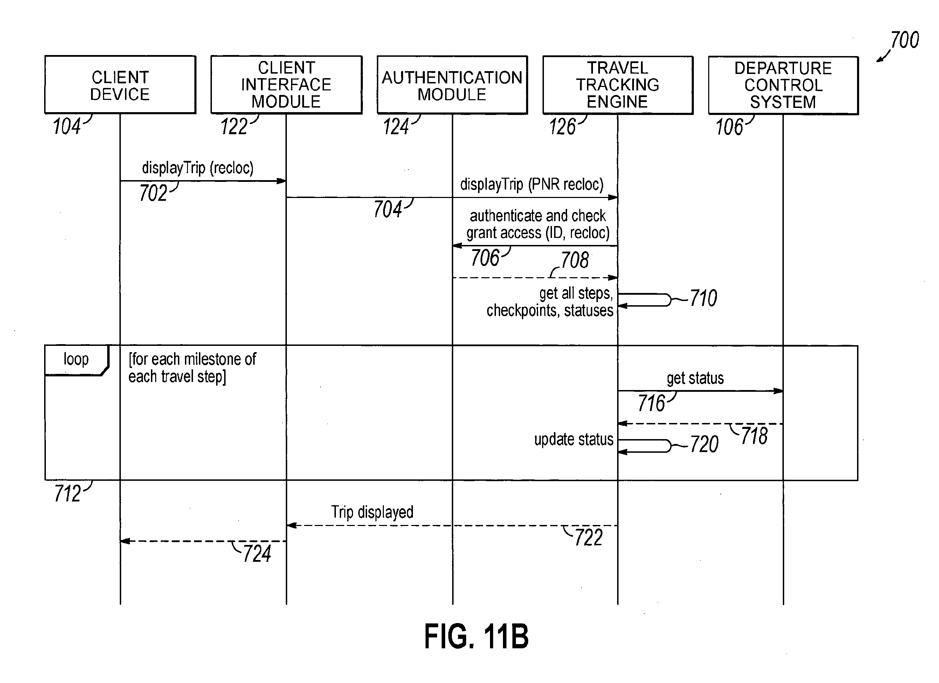

FIG. 11B provides an example routine 700 in the form of a sequence diagram that may be performed by the data processing system 100 in communication with a client device 104 and a departure control system 106. As shown, a client device 104 may communicate a trip information display request to the data processing system 100 via the client interface module 122 (block 702), where the trip information display request may include a record locator and/or other such identifying information that may identify a travel record and/or traveler. In addition, the request may include information that identifies a user of the client device 104. The client interface module 122 forwards the trip information display request to the travel tracking engine 126 (block 704), and the travel tracking engine 126 communicates an authentication request for the trip information display request to the authentication module 124 (block 706). The authentication module 124 checks the user and a travel record security grant associated with the travel record. In this example, the authentication module 124 indicates that the request is permitted and that the user is allowed to access trip information for the travel record (block 708).

In response to receiving a positive response from the authentication module 124, the travel tracking engine 126 accesses a travel model associated with the travel record identified in the trip information display request to retrieve travel steps, checkpoints, and statuses of the checkpoints for the travel record (block 710). As shown, the travel tracking engine 126 initializes a loop 712 that causes the travel tracking engine 126 to query the departure control system 106 (block 714) for each checkpoint of each travel step to determine a status. As will be appreciated, embodiments where the travel tracking engine 126 initializes the loop 712 to determine statuses for checkpoints may be referred to as being configured with a pull mechanism for monitoring of travel data from various sources (such as the departure control system in the example of FIG. 11B). For each checkpoint of each travel step, the travel tracking engine receives travel data from the departure control system 106 (block 718) that indicates whether a travel event associated with the checkpoint has occurred. For example, a checkpoint may correspond to boarding of a flight, and the travel tracking engine 126 may query the departure control system to pull travel data. In this example, the travel tracking engine 126 analyzes the travel data to determine whether boarding for the flight has occurred.

Responsive to detecting the occurrence of a travel event associated with a checkpoint based on travel data from the departure control system 106, the travel tracking engine 126 updates a status of a checkpoint object associated with a travel step object corresponding to the travel record in the travel model (block 720).

Based on the travel steps determined from travel step objects of the travel model, checkpoints determined from checkpoint objects of the travel model, and statuses determined from the checkpoint objects, the data processing system 100 generates a graphical user interface that includes trip information corresponding to the travel record that is accessible by the client device 104 through the client interface module (block 722-724).

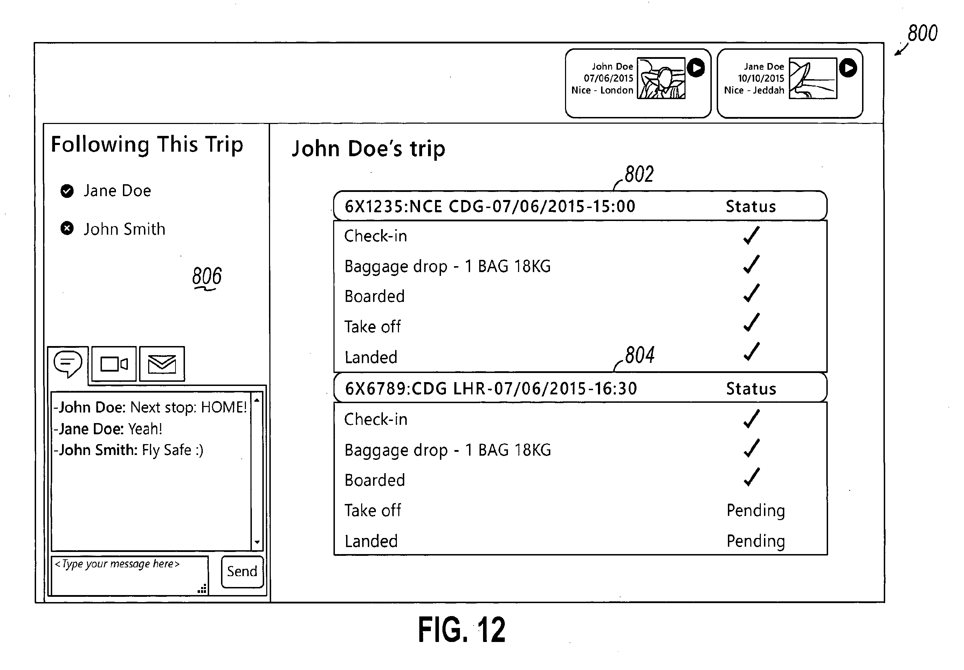

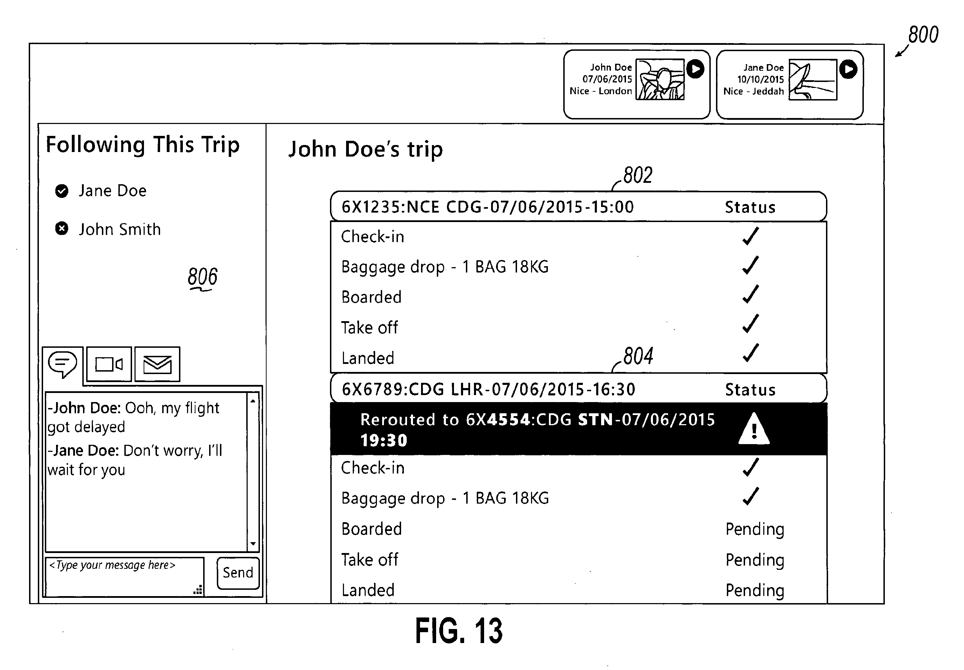

FIG. 12 provides a diagrammatic illustration of an example graphical user interface 800 that may be generated by the data processing system 100 and accessible by a client device 104 via the client interface module 122. In this example, the graphical user interface 800 includes travel information for a particular travel record (i.e., 'John Doe's trip'). As shown, the graphical user interface 800 includes data fields associated with travel steps and checkpoints of the travel record. The graphical user interface 800 includes a first data field for a first travel step corresponding to a first flight '6X 1235: NCE CDG' 802 and a second data field for a second travel step corresponding to a second flight '6X 6789: CDG LHR' 804. In this example, the graphical user interface 800 displays travel information for the first flight based on checkpoint statuses corresponding to the first flight. Specifically, the graphical user interface 800 indicates that the traveler has checked-in, baggage has been dropped, the traveler has boarded, the flight has taken off, and the flight has landed. For the second flight, the graphical user interface 800 displays travel information that indicates that the traveler has checked-in, baggage has been dropped, and the passenger has boarded. However, as shown in the example, the graphical user interface 800 indicates that take-off of the second flight and landing of the second flight have not occurred (i.e., the status is pending). Furthermore, the graphical user interface 800 includes a data field that identifies followers for the trip 806, where such data field may provide a communication interface for the traveler and followers. In FIG. 13 the graphical user interface 800 has been updated in response to a travel event associated with the travel record. In particular, real-time departure control data indicates that the second flight has been re-routed. Therefore, as shown, the data field for the second flight 804 has been updated to indicate that the flight has been changed to '6X 4554: CDG STN'.

Therefore, as will be appreciated, embodiments of the invention filter and analyze travel related data from various sources (e.g., a departure control system, a travel merchant reservation management system, etc.) and to publish travel information associated with a particular travel record based on the travel related data. Furthermore, embodiments of the invention generate data structures configured to maintain data elements in a format that may be retrieved and used to generate one or more graphical user interfaces for access by client devices. As will be appreciated, a travel model, as generated and maintained consistent with embodiments of the invention, may facilitate storage and retrieval of travel information for a travel record, where such travel information may be determined from travel related data received from various sources. In general, a complete journey reflected in a travel record corresponds to an integration of many different specialized data processing systems (e.g., departure control systems, travel inventory systems, reservation systems, disruption handling systems, travel merchant reservation management systems, location information systems, etc.).

The data maintained and generated by such specialized data processing systems is generally tailored to a specific purpose of the specialized data processing system. Therefore, embodiments of the invention monitor data feeds of such specialized data processing systems and analyze the data to identify data that corresponds to travel records relevant to the data processing system. For each travel record relevant to the data processing system, the data processing system monitors travel related data and updates a travel model corresponding to the travel record responsive to detecting travel related data relevant to the travel record. Using the maintained travel model for a particular travel record, the data processing system may provide an integrated and dedicated interface through which a user may access travel information for a travel record, where such travel information is generally maintained in real-time. Therefore, embodiments of the invention provide an improvement in data processing systems related to travel. Furthermore, embodiments of the invention facilitate integrated collection and analysis of travel related data from different data sources/specialized processing systems.

As will be appreciated, embodiments of the invention generally improve database operation and analysis for data processing systems used in the electronic travel reservation and management technology area. In particular, embodiments of the invention transform data of a travel record and travel related data received from one or more data sources into an integrated data model (i.e., a travel model) for storage in a database optimized for the maintenance and analysis thereof. With the integrated data model, embodiments of the invention may generate one or more graphical user interfaces for access, where such graphical user interfaces may provide an integrated display of travel information maintained generally in real-time.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method for processing real-time travel data comprising:
querying, with at least one processor of a data processing system, a travel record database to determine a particular travel record from a plurality of travel records managed by the travel record database;
parsing, with the at least one processor, the particular travel record to identify one or more travel steps of the particular travel record;
for each of the one or more travel steps, determining one or more corresponding checkpoints;
generating a travel model for the particular travel record in a data structure of a travel model database of the data processing system, wherein the travel model comprises a travel step object for each identified travel step of the particular travel record, and each travel step object comprises a checkpoint object for each of the one or more corresponding checkpoints of the respective travel step;
monitoring a departure control system for real-time departure control data corresponding to the particular travel record; and
updating a status of at least one checkpoint object of the travel model based at least in part on the real-time departure control data corresponding to the particular travel record.

2. The method of claim 1, further comprising:
generating a graphical user interface based at least in part on the travel model and that displays status information for the particular travel record.

3. The method of claim 1 or claim 2, wherein the particular travel record comprises a particular flight, the one or more travel steps of the particular travel record comprise a flight travel step associated with the particular flight, the travel model comprises a flight travel step object corresponding to the flight travel step, the flight travel step includes a check-in checkpoint, the travel model comprises a check-in checkpoint object for the check-in checkpoint that is associated with the flight travel step object, and monitoring the departure control system for real-time departure control system data corresponding to the particular travel record comprises:
monitoring the departure control system to detect the real-time departure control system data indicating that check-in has occurred for the particular flight,
wherein updating the status of the at least one checkpoint object of the travel model based at least in part on the real-time departure control data corresponding to the particular travel record comprises updating the check-in checkpoint object responsive to detecting the real-time departure control system data indicating that the check-in has occurred for the particular flight.

4. The method of claim 1 or claim 2, wherein the particular travel record comprises a particular flight, the one or more travel steps of the particular travel record comprise a flight travel step associated with the particular flight, the travel model comprises a flight travel step object corresponding to the flight travel step, the flight travel step comprises a departure checkpoint, the travel model comprises a departure checkpoint object for the departure checkpoint that is associated with the flight travel step object, and monitoring the departure control system for real-time departure control system data corresponding to the particular travel record further comprises:
monitoring the departure control system to detect the real-time departure control system data indicating that departure has occurred for the particular flight,
wherein updating the status of the at least one checkpoint object of the travel model based at least in part on the real-time departure control data corresponding to the particular travel record comprises updating the departure checkpoint object responsive to detecting the real-time departure control system data indicating that the departure has occurred for the particular flight.

5. The method of claim 1 or claim 2, wherein the particular travel record comprises a particular flight, the one or more travel steps of the particular travel record comprise a flight travel step associated with the particular flight, the travel model comprises a flight travel step object corresponding to the flight travel step, the flight travel step comprises a baggage drop checkpoint, the travel model comprises a baggage drop checkpoint object for the baggage drop checkpoint that is associated with the flight travel step object, and monitoring the departure control system for real-time departure control system data corresponding to the particular travel record further comprises:
monitoring the departure control system to detect the real-time departure control system data indicating that baggage drop has occurred for the particular flight,
wherein updating the status of the at least one checkpoint object of the travel model based at least in part on the real-time departure control data corresponding to the particular travel record comprises updating the baggage drop checkpoint object responsive to detecting the real-time departure control system data indicating that the baggage drop has occurred for the particular flight.

6. The method of any of claim 1 or claim 2, wherein the particular travel record comprises a particular flight, the one or more travel steps of the particular travel record comprise a flight travel step associated with the particular flight, the travel model comprises a flight travel step object corresponding to the flight travel step, the flight travel step comprises an arrival checkpoint, the travel model comprises an arrival checkpoint object for the arrival checkpoint that is associated with the flight travel step object, and monitoring the departure control system for real-time departure control system data corresponding to the particular travel record further comprises:
monitoring the departure control system to detect the real-time departure control system data indicating that arrival has occurred for the particular flight,
wherein updating the status of the at least one checkpoint object of the travel model based at least in part on the real-time departure control data corresponding to the particular travel record comprises updating the arrival checkpoint object responsive to detecting the real-time departure control system data indicating that the arrival has occurred for the particular flight.

7. The method of claim 1 or claim 2, wherein the particular travel record comprises a particular flight, the one or more travel steps of the particular travel record comprise a flight travel step associated with the particular flight, the travel model comprises a flight travel step object corresponding to the flight travel step, the flight travel step comprises a boarding checkpoint, the travel model comprises a boarding checkpoint object for the boarding checkpoint that is associated with the flight travel step object, and monitoring the departure control system for real-time departure control system data corresponding to the particular travel record further comprises:
monitoring the departure control system to detect the real-time departure control system data indicating that boarding has occurred for the particular flight,
wherein updating the status of the at least one checkpoint object of the travel model based at least in part on the real-time departure control data corresponding to the particular travel record comprises updating the boarding checkpoint object responsive to detecting the real-time departure control system data indicating that the boarding has occurred for the particular flight.

8. The method of claim 1 or claim 2, wherein the particular travel record comprises a hotel reservation, the one or more travel steps of the particular travel record comprise a hotel travel step associated with the hotel reservation, the travel model comprises a hotel travel step object corresponding to the hotel travel step, the hotel travel step includes a check-in checkpoint, the travel model comprises a hotel checkpoint object for the check-in checkpoint that is associated with the hotel travel step object, and further comprising:
monitoring a reservation information feed of a reservation management system for a hotel associated with the hotel reservation to detect travel related data from the reservation information feed indicating that check-in has occurred for the hotel reservation; and
updating the hotel checkpoint object of the hotel travel step object responsive to detecting the travel related data from the reservation information feed indicating that the check-in has occurred for the hotel reservation.

9. The method of claim 1 or claim 2, wherein the particular travel record comprises a hotel reservation, the one or more travel steps of the particular travel record comprise a hotel travel step associated with the hotel reservation, the travel model comprises a hotel travel step object corresponding to the hotel travel step, the hotel travel step includes a check-out checkpoint, the travel model comprises a hotel checkpoint object for the check-out checkpoint that is associated with the hotel travel step object, and further comprising:
monitoring a reservation information feed of a reservation management system for a hotel associated with the hotel reservation to detect travel related data from the reservation information feed indicating that check-out has occurred for the hotel reservation; and
updating the hotel checkpoint object of the hotel travel step object responsive to detecting the travel related data from the reservation information feed indicating that the check-out has occurred for the hotel reservation.

10. The method of claim 1 or claim 2, further comprising:
monitoring a disruption handler system feed of a disruption handler system for real-time disruption-handling data corresponding to the particular travel record; and
updating a respective status of at least one checkpoint object of the travel model based at least in part on the real-time disruption-handling data corresponding to the particular travel record.

11. The method of claim 1 or claim 2, further comprising:
monitoring a location information system for real-time location information corresponding to a traveler of the particular travel record; and
updating a respective status of at least one checkpoint object of the travel model based at least in part on the real-time location information corresponding to the traveler.

12. The method of claim 1, further comprising:
receiving a user request from a user device at the data processing system for travel information associated with the particular travel record;
authenticating the user request based at least in part on security settings stored in a security database maintained at the data processing system for the particular travel record; and
generating a graphical user interface for the user device comprising the travel information associated with the particular travel record based at least in part on the travel model.

13. The method of claim 12, further comprising:
after generating the graphical user interface for the user device, updating the graphical user interface responsive to updating the status of the at least one checkpoint object of the travel model.

14. A computer program product comprising:
a computer readable storage medium; and
program code stored on the computer readable storage medium and configured, upon execution, to cause at least one processor to perform the method of any of claims 1 to 13.

15. A system for processing real-time travel data comprising:
at least one processor; and
a memory coupled to the at least one processor, the memory comprising:
a data structure stored thereon and configured to store a travel model that corresponds to a particular travel record; and
program code stored thereon and configured to be executed by the at least one processor to cause the at least one processor to perform the method of any of claims 1 to 13.
